# EUROPÄISCHE PATENTSCHRIFT

(11) **EP 2 005 795 B1**
(45) Veröffentlichungstag und Bekanntmachung des Hinweises auf die Patenterteilung: **20.04.2016**
(21) Anmeldenummer: 07703011.2
(22) Anmeldetag: 25.01.2007
(51) Int. Cl.: H05B 3/14, B29C 65/20, H05B 3/24, B29K 27/06

(54) **ELEKTRISCHES HEIZELEMENT**
ELECTRICAL HEATING ELEMENT
ÉLÉMENT DE CHAUFFAGE ÉLECTRIQUE

(30) Priorität: 08.04.2006 DE 102006016695
(43) Veröffentlichungstag der Anmeldung: 24.12.2008
(73) Patentinhaber: Leister Technologies AG, 6056 Kägiswil (CH)
(72) Erfinder: CHEN, Jie-Wei, CH-6055 Alpnach Dorf (CH); GREBER, Alexander, CH-6205 Eich (CH)
(74) Vertreter: Klocke, Peter
(86) Internationale Anmeldenummer: PCT/EP2007/000614
(87) Internationale Veröffentlichungsnummer: WO 2007/115599

(56) Entgegenhaltungen:
- EP-A- 0 100 715
- EP-A- 1 452 261
- EP-A- 1 650 010
- EP-A1- 0 781 889
- DD-A1- 49 995
- DE-A1- 19 545 825
- DE-U1- 9 409 636

## Beschreibung

Die Erfindung betrifft ein elektrisches Heizelement in Form eines Heizkeils für eine Folienschweißeinrichtung, mit zwei Elektroden und einem zwischen den Elektroden angeordneten Heizwiderstand, so dass ein Anlegen einer elektrischen Spannung an die Elektroden die Erzeugung von Wärme über die Länge des Heizwiderstandes bewirkt, wobei der Heizwiderstand aus einem korrosionsbeständigen Material hergestellt ist und eine Oberseite und eine der Oberseite gegenüberliegende Unterseite des Heizwiderstandes unter einem spitzen Winkel zusammenlaufen.

Elektrische Heizelemente sind an sich bekannt und werden in vielfältigen Ausführungsformen für die verschiedensten Anwendungen eingesetzt. Sie werden beispielsweise auch in Schweißeinrichtungen für das Überlappungsschweißen von Kunststoffbahnen verwendet, bei dem die Bahnen an ihren Fügeflächen durch Temperatureinwirkung mittels einem Heizkeil erwärmt, plastifiziert bzw. aufgeschmolzen und anschließend unter Druckeinwirkung mittels Andruckrollen stoffschlüssig verbunden werden. Dabei wird der Heizkeil bei anliegenden Folienbahnen zwischen den Bahnen geführt. Gebräuchliche Schweißkeile sind aus Metall hergestellt, vorwiegend wegen dessen guter Wärmeleiteigenschaften, und werden mittels dem elektrischen Heizelement, das in den Heizkeil berührend eingreift oder in diesen eingebettet ist, auf eine Temperatur oberhalb der Schmelztemperatur der Kunststoffbahn erhitzt.

Durch die hohen Temperaturen, die zum Schweißen von PVC-Folien nötig sind, werden aggressive Chlorwasserstoffe während des Schweißprozesses freigesetzt. In Verbindung mit Feuchtigkeit entstehen daraus Säuren, welche bei dem Heizkeil und bei dem Heizelement zu Korrosion und zu lokalen Zerstörungen führen, was sich wiederum auf die Qualität der Schweißnähte negativ auswirkt. Der Heizkeil und das Heizelement sind im täglichen Gebrauch nicht nur korrosiv, sondern auch mechanisch hoch belastet, weswegen diese nach einer gewissen Nutzungsdauer ersetzt werden müssen.

Zum Stand der Technik wird beispielhaft auf die Druckschrift DD 49 995 A1 verwiesen. Diese offenbart eine Maschine zur fortlaufenden Nahtbildung an Bahnen und anderen Halbzeugen aus weichen Thermoplasten, weichen thermoplastischen Schaumstoffen, einseitig oder zweiseitig mit Thermoplasten beschichteten Trägerstoffen sowie textilen Gebilden aus thermoplastischen Fasern durch Schweißen mit einem Paar mit elastischer Kraft zusammengepresster Vorschubrollen und einem an deren Zuführungsseite in den zwischen ihnen gebildeten keilförmigen Spalt hineinragenden Heizelement, wobei das Heizelement aus zweckmäßig geformtem Widerstandsmaterial besteht und mit einem zur Stromleitung dienenden Schaft aus elektrisch gut leitendem Werkstoff einen Heizkörper bildet, der lösbar und auswechselbar mit einer Halterung verbunden ist, welche gleichzeitig zur Befestigung des Heizkörpers an den dafür vorgesehenen Funktionselementen der Maschine und zum Anschluss der Spannungsquelle an den Heizkörper dient, wobei eine einwandfreie elektrische Isolation gegen alle leitenden Teile der Maschine gewährleistet ist. Dabei ist das zweckmäßig geformte Widerstandsmaterial, welches vorzugsweise ein keilförmiges Heizelement, d.h. einen Heizkeil des Heizköpers bildet, in seiner Dicke auf die Breite des Heizelementes abgestimmt und so ausgelegt, ist, dass die Temperatur an dem Heizelement mit geringer Trägheit variiert werden kann, wobei der der Werkstoff des Heizelementes einen hohen spezifischen Widerstand und eine hohe Korrosionsbeständigkeit bei gleichzeitiger Wärmebeständigkeit, insbesondere bei Einwirkung von Salzsäure, besitzt.

Der Erfindung liegt daher die Aufgabe zugrunde, ein Heizelement in Verbindung mit einem Heizkeil vorzuschlagen, das gegenüber dem Stand der Technik eine höhere mechanische Verschleißfestigkeit sowie eine bessere Korrosionsbeständigkeit aufweist, um eine längere Nutzungsdauer zu ermöglichen.

Diese Aufgabe wird erfindungsgemäß durch ein elektrisches Heizelement mit den Merkmalen des Anspruchs 1 gelöst. Weitere vorteilhafte Ausgestaltungen sind den Unteransprüchen zu entnehmen.

Gemäß der Erfindung weist der Heizwiderstand eine im wesentlichen keilförmige Kontur auf und ist unter Verwendung eines elektrisch leitfähigen Keramikmaterials hergestellt. Die Elektroden zum Anlegen einer elektrischen Spannung sind stoffschlüssig in das elektrisch leitfähige Keramikmaterial eingebettet und mit dem elektrischen leitfähigen Keramikmaterial elektrisch leitend verbunden. Dabei kann das Keramikmaterial allein den Heizwiderstand bilden oder als Beschichtung auf einen metallischen Heizwiderstand aufgebracht sein. Dazu können beispielsweise Keramikmaterialien wie SiC oder MoSia-Al₂O₃ verwendet werden, die nicht nur exzellente Eigenschaften bezüglich Korrosionsbeständigkeit, Verschleißfestigkeit und Wärmeleitfähigkeit besitzen, sondern vor allem auch eine hohe elektrische Leitfähigkeit. Dabei kann die Leitfähigkeit der Keramik und damit der Stromfluss durch den Heizwiderstand durch Änderung ihrer leit- und nicht leitfähigen Stoffanteile beeinflusst werden.

Eine Oberseite und eine Unterseite des Heizwiderstandes laufen unter einem spitzen Winkel zusammen. Damit zeigt der Heizwiderstand im Wesentlichen die Kontur eines herkömmlichen Heizkeiles, wodurch der Heizwiderstand dessen Funktion mit übernehmen kann. Dies hat den Vorteil, dass der Wärmeübergang von dem Heizelement zu der Kunststofffolie direkt und somit effektiver erfolgt Des Weiteren entfällt damit der bei herkömmlichen Heizkeil-Folienschweißeinrichtungen als separates Teil ausgebildete, indirekt beheizte Heizkeil, was eine Senkung der Herstell- und Wartungskosten bewirkt. Weiterer Vorteil ist, dass die Wärmeverteilung auf dem "keilförmigen" Heizwiderstand wesentlich gleichmäßiger ist als bei dem herkömmlichen Heizkeil, der indirekt über Heizpatronen beheizt wird.

Der Heizwiderstand kann eine oder mehrere Windungen oder Faltungen entlang seinem Verlauf aufweisen. Damit ist seine Länge ein Mehrfaches seiner Höhe und Breite, wobei die ausgebildete effektive Querschnittsverengung eine Einstellung des Widerstandswertes für den Stromfluss bewirkt. Der Stromfluss kann neben dem gewählten Geometriefaktor auch durch eine entsprechende Materialauswahl beeinflusst werden, d. h. durch Variation der Leitfähigkeit des Werkstoffes erfolgen, aus dem der Heizwiderstand hergestellt ist.

In einer vorteilhaften Ausführungsform der Erfindung ist der Heizwiderstand einstückig homogen aus einem elektrisch leitfähigen Keramikmaterial hergestellt. Dies stellt eine schnelle sowie gleichmäßige Wärmeverteilung in dem Heizwiderstand sicher und reduziert dessen Materialkosten bei der Herstellung. Der einstückige keramische Heizwiderstand kann in seiner zweckmäßig geformten Form, die beispielsweise mäanderförmig gewunden oder gefaltet sein kann, gegossen werden. Dabei können die Elektroden stoffschlüssig umhüllt werden, wodurch eine gute mechanische und elektrische Verbindung erreicht wird.

In einer anderen bevorzugten Ausführungsform der Erfindung weist der Heizwiderstand einen Kern aus Metall oder aus einer Metalllegierung und eine Keramikbeschichtung auf. Dazu kann beispielsweise ein korrosionsbeständiger Chrom-Nickel-Stahl oder dergleichen verwendet werden. Es ist auch möglich den metallischen Kern des Heizwiderstandes aus unedleren Materialen herzustellen. Die Keramikbeschichtung vergütet die Oberfläche des metallischen Kernes und wirkt als Schutzüberzug. Sie umhüllt den Kern stoffschlüssig, was eine gute mechanische und elektrische Verbindung ermöglicht. Der Kern des beschichteten Heizwiderstand kann einfach aus einem Metallblock mittels der bekannten industrieüblichen Verfahren zur spanenden Bearbeitung entstehen.

Gegenüber herkömmlichen Heizkeilen weist der keramische oder keramisch beschichtete "keilförmige" Heizwiderstand eine mehrfach höhere Verschleiß- und Korrosionsbeständigkeit auf. Gleichzeitig zeigt er ein geringeres Haftungsvermögen für Kunststoffschmelzrückstände, was ein leichteres Gleiten des Heizwiderstandes zwischen den Folienbahnen bewirkt. Zudem entfällt bei einem keramischen Heizwiderstand das Umrüsten für unterschiedliche Kunststofffolien, wie es bei herkömmlichen metallischen Schweißkeilen oft notwendig ist.

Vorzugsweise sind die Elektroden bei dem erfindungsgemäßen Heizwiderstand an einem von einer Spitze des Heizwiderstandes entfernten Bereich seitlich über den Heizwiderstand vorstehend angeordnet. Auf diese Weise kann der Heizwiderstand problemlos zwischen die zu verschweißenden Kunststoffbahnen eingebracht und in deren Längsrichtung leichtgängig verschoben werden.

Es hat sich als besonders vorteilhaft erwiesen, an den Elektroden Befestigungsmittel zum Fixieren des Heizwiderstandes an der Schweißeinrichtung vorzusehen. Diese können im einfachsten Fall Durchgangsbohrungen in den Elektroden sein. Auf diese Weise kann auf separate Befestigungsmittel verzichtet werden, was den Herstellungsprozess des elektrischen Heizelements vereinfacht und eine höhere mechanische Verschleißfestigkeit bewirkt.

Nachfolgend wird die Erfindung anhand zweier in der Zeichnung dargestellten Ausführungsbeispiele näher erläutert. Weitere Merkmale der Erfindung ergeben sich aus der folgenden Beschreibung der Ausführungsbeispiele der Erfindung in Verbindung mit den Ansprüchen und der beigefügten Zeichnung. Die einzelnen Merkmale können je für sich allein oder zu mehreren bei unterschiedlichen Ausführungsformen der Erfindung verwirklicht sein. Es zeigen:
- Figur 1: einen erfindungsgemäßen Heizwiderstand mit einem gewundenen Verlauf in einer perspektivischen Ansicht; und
- Figur 2: einen erfindungsgemäßen Heizwiderstand mit einem gefalteten Verlauf in einer perspektivischen Ansicht.

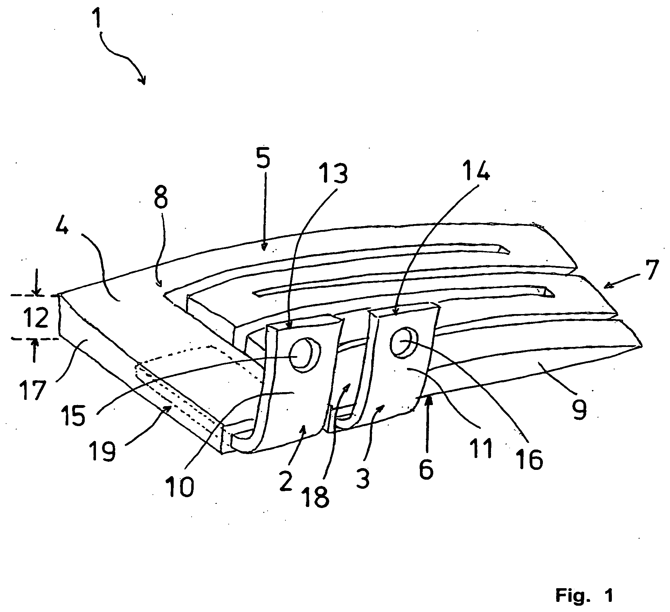

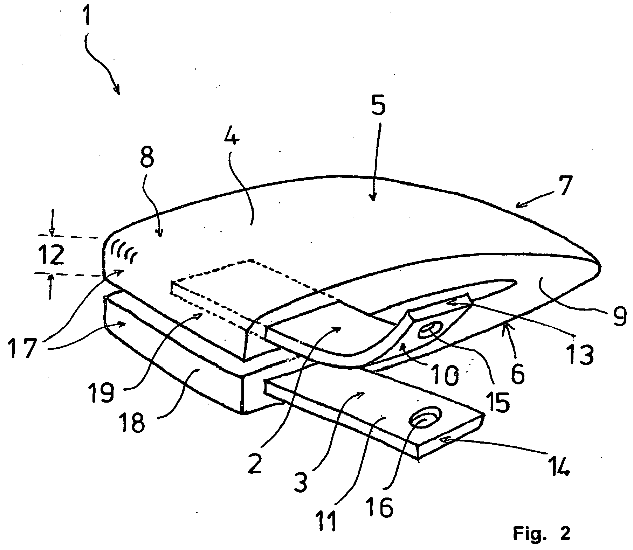

Die in den Figuren 1 und 2 dargestellten erfindungsgemäßen Heizelemente 1 umfassen zwei Elektroden 2,3 und einen elektrisch leitend mit den Elektroden 2, 3 verbundenen Heizwiderstand 4. Der Heizwiderstand 4 zeigt eine keilförmige Kontur mit einer Oberseite 5 und einer Unterseite 6, die unter einem spitzen Winkel zusammenlaufen und in einer Spitze 7 enden.

Die Elektroden 2, 3 sind in einem von der Spitze 7 entfernten Bereich 8 des Heizwiderstandes 4 angeordnet und treten seitlich aus einer Seitenfläche 9 des elektrischen Heizelements 1 vor. Sie weisen eine flache rechteckige Querschnittsform auf und verlaufen in einer Ebene senkrecht zur Unterseite 6 und parallel zur Seitenfläche 9 des Heizwiderstands 4. Schenkel 10, 11 der Elektroden 2, 3 überragen die Oberseite 5 des Heizwiderstandes 4 um ein Mehrfaches seiner Dicke 12 und weisen an ihren oberen Enden 13, 14 Löcher 15, 16 als Befestigungsmittel zur Fixierung des Heizelementes 1 an einer in der Zeichnung nicht dargestellten Schweißeinrichtung auf.

Der Heizwiderstand 4 des elektrische Heizelement 1 ist aus einem elektrisch leitfähigen Keramikmaterial hergestellt und zeigt eine keilförmige Kontur mit einer länglichen Form und einer hinteren Kante 17, von der aus sich der Heizwiderstand 4 in Richtung der vorderen Spitze 7 des Heizelementes 1 und wieder zurück zur hinteren Kante 17 erstreckt. In dem von der Spitze 7 entfernten Bereich 8 an der hinteren Kante 17 sind in Enden 18, 19 des Heizwiderstand 4 die Elektroden 2, 3 stoffschlüssig eingebettet und mit diesen elektrisch leitend verbunden.

Die Figur 1 zeigt ein elektrisches Heizelement 1, dessen Heizwiderstand 4 einen mäanderförmig gewundenen Verlauf aufweist. Sein Heizwiderstand 4 erstreckt sich dabei mehrmals von der hinteren Kante 17 zur vorderen Spitze 7 des Heizelementes 1 und wieder zurück. Demgegenüber zeigt Figur 2 ein Heizelement 1 mit einem gefalteten Heizwiderstand 4. Dieser ist einfach gefaltet und erstreckt sich von der hinteren Kante 17 zur vorderen Spitze 7 und wieder zurück zur hinteren Kante 17 des Heizelementes 1. Die Oberseite 5 und die Unterseite 6 des Heizwiderstandes 4 sind vorzugsweise plan, d. h. ohne Unebenheiten ausgebildet.

## Patentansprüche

1. Elektrisches Heizelement (1) in Form eines Heizkeils für eine Folienschweißeinrichtung, mit zwei Elektroden (2, 3) und einem zwischen den Elektroden (2, 3) angeordneten Heizwiderstand (4), so dass ein Anlegen einer elektrischen Spannung an die Elektroden (2, 3) die Erzeugung von Wärme über die Länge des Heizwiderstandes (4) bewirkt, wobei der Heizwiderstand (4) aus einem korrosionsbeständigen Material hergestellt ist und eine Oberseite (5) und eine der Oberseite (5) gegenüberliegende Unterseite (6) des Heizwiderstandes (4) unter einem spitzen Winkel zusammenlaufen, und wobei der Heizwiderstand (4) eine im wesentlichen keilförmige Kontur aufweist und unter Verwendung eines elektrisch leitfähigen Keramikmaterials hergestellt ist, wobei die Elektroden (2, 3) in das elektrisch leitfähigen Keramikmaterial stoffschlüssig eingebettet und mit diesem elektrisch leitend verbunden sind.

2. Elektrisches Heizelement nach Anspruch 1, **dadurch gekennzeichnet, dass** der Heizwiderstand (4) einstückig homogen aus einem elektrisch leitfähigen Keramikmaterial hergestellt ist.

3. Elektrisches Heizelement nach Anspruch 1, **dadurch gekennzeichnet, dass** der Heizwiderstand (4) einen Kern aus Metall oder aus einer Metalllegierung und eine Keramikbeschichtung aufweist.

4. Elektrisches Heizelement nach einem der vorangegangenen Ansprüche, **dadurch gekennzeichnet, dass** die Elektroden (2, 3) an einem von einer Spitze (7) des Heizwiderstandes (4) entfernten Bereich (8) seitlich über den Heizwiderstand (4) vorstehend angeordnet sind.

5. Elektrisches Heizelement nach einem der vorangegangenen Ansprüche, **dadurch gekennzeichnet, dass** die Elektroden (2, 3) Befestigungsmittel (15, 16) zur Fixierung aufweisen.

## Claims

1. Electrical heating element (1), in terms of a welding wedge for a hot-wedge film welding device, comprising two electrodes (2, 3) and a heating resistor (4) being arranged between the electrodes (2, 3), so that an application of an electrical voltage to the electrodes (2, 3) results in heat being produced along the length of the heating resistor (4), wherein the heating resistor (4) is made of a corrosion-resistant material and has a top side (5) and a bottom side (6) opposite from the top side, with both sides of the heating resistor (4) converging at an acute angle, and wherein the heating resistor (4) essentially comprises a wedge-shaped contour and is produced by using an electrically conductive ceramic material, wherein the electrodes (2, 3) are embedded with positive surface-to-surface contact into the electrically conductive ceramic material and are connected to said material in an electrically conductive manner.

2. Electrical heating element according to claim 1, **characterized in that** the heating resistor (4) is made homogeneously in one piece from an electrically conductive ceramic material.

3. Electrical heating element according to claim 1, **characterized in that** the heating resistor (4) has a core made of metal or a metal alloy, and a ceramic coating.

4. Electrical heating element according to one of the preceding claims, **characterized in that** the electrodes (2, 3) are arranged laterally protruding over the heating resistor (4) at an area (8) that is remote from the tip (7) of the heating resistor (4).

5. Electrical heating element according to one of the preceding claims, **characterized in that** the electrodes (2, 3) have attachment elements (15, 16) for locking the heating resistor (4) in position.

## Revendications

1. Elément chauffant électrique (1) sous la forme d'un coin chauffant pour un dispositif de soudage de feuilles, comportant deux électrodes (2, 3) et une résistance chauffante (4) disposée entre les électrodes (2, 3), de telle sorte qu'une application d'une tension électrique aux électrodes (2, 3) entraîne la production de chaleur sur la longueur de la résistance chauffante (4), la résistance chauffante (4) étant fabriquée à partir d'un matériau résistant à la corrosion, et une face supérieure (5) et une face inférieure (6) opposée à la face supérieure (5) de la résistance chauffante (4) convergeant selon un angle aigu, et la résistance chauffante (4) présentant un contour sensiblement en forme de coin et étant fabriquée en utilisant un matériau céramique électriquement conducteur, les électrodes (2, 3) étant incorporées par liaison de matière dans le matériau céramique électriquement conducteur et reliées à celui-ci de manière électroconductrice.

2. Elément chauffant électrique selon la revendication 1, **caractérisé en ce que** la résistance chauffante (4) est fabriquée d'une seule pièce de manière homogène à partir d'un matériau céramique électriquement conducteur.

3. Elément chauffant électrique selon la revendication 1, **caractérisé en ce que** la résistance chauffante (4) présente un noyau en métal ou en un alliage de métaux et un revêtement en céramique.

4. Elément chauffant électrique selon l'une des revendications précédentes, **caractérisé en ce que** les électrodes (2, 3) sont disposées sur une zone (8) éloignée de la pointe (7) de la résistance chauffante (4), latéralement en saillie au-dessus de la résistance chauffante (4).

5. Elément chauffant électrique selon l'une des revendications précédentes, **caractérisé en ce que** les électrodes (2, 3) présentent des moyens de fixation (15, 16) pour la fixation.
